# EUROPÄISCHE PATENTSCHRIFT

(11) **EP 3 727 938 B1**
(45) Veröffentlichungstag und Bekanntmachung des Hinweises auf die Patenterteilung: **25.08.2021**
(21) Anmeldenummer: 18826218.2
(22) Anmeldetag: 11.12.2018
(51) Int. Cl.: B60R 1/06

(54) **KAMERA-ARM EINES KAMERABASIERTEN SPIEGELERSATZ-SYSTEMS FÜR EIN KRAFTFAHRZEUG**
CAMERA ARM OF A CAMERA-BASED MIRROR SUBSTITUTE SYSTEM FOR A MOTOR VEHICLE
BRAS DE CAMÉRA D'UN SYSTÈME DE RÉTROVISEUR DE SUBSTITUTION UTILISANT UNE CAMÉRA POUR UN VÉHICULE AUTOMOBILE

(30) Priorität: 22.12.2017 DE 102017223716; 17.04.2018 DE 102018205848
(43) Veröffentlichungstag der Anmeldung: 28.10.2020
(73) Patentinhaber: Continental Automotive GmbH, 30165 Hannover (DE)
(72) Erfinder: MIETHIG, Werner, 81737 München (DE)
(74) Vertreter: Continental Corporation
(86) Internationale Anmeldenummer: PCT/EP2018/084404
(87) Internationale Veröffentlichungsnummer: WO 2019/121177

(56) Entgegenhaltungen:
- EP-A2- 0 209 666
- AT-B- 310 591
- DE-A1- 2 826 938
- FR-A1- 2 369 122
- US-A1- 2016 243 988

## Beschreibung

Die Erfindung betrifft einen Kamera-Arm eines kamerabasierten Spiegelersatz-Systems für ein Kraftfahrzeug welcher einen Schwenkmechanismus mit zumindest einem Planetengetriebe aufweist.

Rückspiegel, welche einem Führer eines Kraftfahrzeugs Sicht nach hinten gewähren, sind bei Kraftfahrzeugen allgegenwärtig und gesetzlich vorgeschrieben. Künftig sollen die üblichen Rückspiegel durch Kamera-Monitor-Systeme ersetzt werden. Hierbei wird Sicht nach hinten gewährt, indem von Kameras aufgenommene Bilder einem Führer eines Kraftfahrzeugs auf Monitoren angezeigt werden. Es ist zweckmäßig für derartige kamerabasierte Spiegelersatzsysteme für Nutzfahrzeuge, die Kameras nicht direkt an der Fahrzeugkarosserie anzubringen, sondern sie davon zu beabstanden: Bekannte Rückspiegel weisen einen gewissen Abstand zur Fahrzeugkarosserie auf. Dadurch wird beispielsweise ein günstiger Sichtbereich gewährt. Dabei sind Abstände von Spiegel und Karosserie in der Größenordnung von 5 cm bis einigen zehn Zentimetern üblich, beispielsweise 80 cm für einen besonders weiten Sichtbereich bei stark ausscherenden Fahrzeuggespannen, Schwertransportern, landwirtschaftlichen Maschinen, Bergbaufahrzeugen und - Gerät. Für eine Anordnung von Kameras kamerabasierte Spiegelersatzsystemen an Fahrzeugen, insbesondere als Ersatz für Außenspiegel oder Seitenspiegel, ist es daher erwünscht, die Kameras auch von der Karossiere beabstandet anzuordnen. Dazu können Kamera-Arme verwendet werden, welche beispielsweise an Fahrzeugkabinen angebracht werden können.

Starre Anordnungen von Kameras bieten der mechanischen Gestaltung, den Kameras und weiteren, mit den Kameras an den Kamera-Armen angeordneten Modulen, Elementen und Vorrichtungen keinen ausreichenden Schutz gegen schädliche äußere Einwirkungen wie Kräfte von allen Seiten, Stoßbelastungen und Schockbelastungen. Starre Befestigungen sind den potentiellen Schadwirkungen von mechanischer Krafteinwirkung gegenüber empfindlich.

Aus AT 310 591 B1 ist ein Außenrückspiegel für Fahrzeuge bekannt, wobei ein an einer Karosserie eines Fahrzeuges angeschraubter Sockel, ein daran angeordneter Schwenkarm und ein mit dem Schwenkarm verbundener Spiegelträger vorgesehen sind. Als Schwenkarm können Lenklaschen dienen, an denen drehbar zwei Antriebsräder gelagert sind, die als Zahnräder ausgebildet sind und die mit einem an den Lenklaschen drehbar gelagerten Zwischenzahnrad im Eingriff stehen.

Aus US 2016/243988 A1 ist eine äußere Rückspiegelanordnung für ein Fahrzeug bekannt, die einen Spiegelkopf und ein Kameramodul aufweist. Das Kameramodul ist an dem Spiegelkopf angeordnet.

Eine Aufgabe der vorliegenden Erfindung ist daher, eine Befestigung für Kameras von Kamera-Monitor-Systeme zum Spiegelersatz bei Kraftfahrzeugen (in Form eines Kamera-Arms) zu schaffen, die einen verbesserten Schutz vor äußeren schädlichen Einwirkungen auf die Befestigung bzw. den Kamera-Arm und auf alle daran angeordneten Elemente, Vorrichtungen und Module, insbesondere Kameras, bietet und die einen optimalen Bildbereich der Kameras ermöglicht.

Diese Aufgabe wird durch den Kamera-Arm gemäß Anspruch 1 gelöst. Ausgestaltungen und Weiterbildungen des Erfindungsgedankens sind Gegenstand von abhängigen Ansprüchen.

Der hier vorgeschlagene Kamera-Arm eines kamerabasierten Spiegelersatz-Systems für ein Kraftfahrzeug weist ein erstes Strukturelement zur Verbindung des Kamera-Arms mit einem Kraftfahrzeug und ein zweites Strukturelement, welches zumindest eine Kamera aufweist, auf, wobei das zweite Strukturelement gegenüber dem ersten Strukturelement schwenkbar ist. Der hier vorgeschlagene Kamera-Arm zeichnet sich dadurch aus, dass das zweite Strukturelement und das erste Strukturelement über einen Schwenkmechanismus miteinander verbunden sind, wobei der Schwenkmechanismus ein Planetengetriebe aufweist. Beispielsweise ist das zweite Strukturelement gegenüber dem ersten Strukturelement nicht um eine ortsfeste Achse schwenkbar. Vorzugsweise ist der Schwenkmechanismus derart ausgebildet, dass die Schwenkbewegung des zweiten Strukturelements gegenüber dem ersten Strukturelement einer Zykloidenkurve folgt.

Besondere Ausführungsformen sind Gegenstand der Unteransprüche.

Die Ausdrücke Bildbereich, Sichtbereich, Sichtfeld und Blickfeld sind synonym zu verstehen: Ein Sichtbereich einer Kamera stellt den Bereich dar, den eine Kamera "sieht". Diesen Bereich gibt sie in Form eines Bildes weiter. Demnach ergibt sich aus dem Sichtbereich der Bildbereich. Der Sichtbereich dieser Kamera entspricht aber auch dem Sichtfeld. Blickfeld ist ohnehin ein Synonym für Blickfeld. Unter Blickwinkel kann ein Winkel verstanden werden, der ein Blickfeld definiert. Blickwinkel ist auch ein Synonym für Perspektive.

Bei einer besonders vorteilhaften Ausführungsform sind das erste Strukturelement und das zweite Strukturelement des Kamera-Arms direkt mittels des Schwenkmechanismus' miteinander verbunden, d.h. der Schwenkmechanismus bildet die Verbindung zwischen dem ersten und dem zweiten Strukturelement des Kamera-Arms. Durch diese Gestaltung können besonders vorteilhaft weitere Teile eingespart werden, wodurch geringe Kosten, geringe Masse und eine kompakte Bauweise eines Kamera-Arms ermöglicht werden.

Bei einer weiteren besonders vorteilhaften Ausführungsform eines hier vorgeschlagenen Kamera-Arms sind das zweite Strukturelement und das erste Strukturelement über mehr als einen Schwenkmechanismus miteinander verbunden. Ein derartiger Kamera-Arm könnte also beispielsweise mehrere Schwenkmechanismen aufweisen. Das könnte beispielsweise zwei oder mehr Planetengetriebe bedeuten. Oder auch eine Kombination, welche ein Planetengetriebe und einen anderen Schwenkmechanismus als ein Planetengetriebe, beispielsweise einen Schwenkmechanismus mit einem Kugelgelenk oder einem Axialgelenk, aufweist. Diese Ausführungsform ermöglicht besonders vorteilhaft eine erweiterte Beweglichkeit eines derartigen Kamera-Arms.

Bei einer weiteren besonders vorteilhaften Ausführungsform eines hier vorgeschlagenen Kamera-Arms sind das zweite Strukturelement und das erste Strukturelement über einen Schwenkmechanismus und zusätzliche Strukturelemente miteinander verbunden. Durch die Verwendung von zusätzlichen Strukturelementen ergibt sich besonders vorteilhaft, dass der Kamera-Arm auf vielfältigere Art und Weise an einem Fahrzeug angebracht werden kann und für ein größeres Spektrum für Anordnungspositionen geeignet ist.

Bei einer weiteren besonders vorteilhaften Ausführungsform eines hier vorgeschlagenen Kamera-Arms sind die Schwenkmechanismen so ausgeführt, dass der Kamera-Arm um zumindest zwei Achsen schwenkbar ist, wobei die Achsen nicht parallel zueinander liegen. Besonders vorteilhaft ergibt sich dadurch, dass der Kamera-Arm in drei Dimensionen beweglich wird und gegen aus drei Dimensionen einwirkende schädliche Krafteinwirkungen unempfindlich wird, weil er diesen ausweichen kann. Ein mit zwei Schwenkmechanismen mit nicht parallelen Achsen ausgerüsteter Kamera-Arm kann, wenn er sich senkrecht von einem Fahrzeug und quer zur Fahrtrichtung erstreckt, seine Längsachse also senkrecht beispielsweise zu einer Fahrzeugkabinenwand steht, können entlang der Längsachse auftretende Kräfte aufgenommen werden, indem der Arm über die zumindest zwei Schwenkmechanismen insgesamt gestaucht wird. Dabei wird also der dem Fahrzeug fernste Punkt eines solchen Kamera-Arms, welcher beispielsweise am zweiten Strukturelement befindlich sein kann, der Kabinenwand näher kommen. Wenn ein erster Schwenkmechanismus Schwenkbewegungen um eine senkrechte Achse oder in einer horizontalen Ebene erlaubt, kann er beispielsweise parallel zur Fahrtrichtung am zweiten Strukturelement des Kamera-Arms auftretende äußere Kräfte tolerieren, indem der Arm in diesem ersten Schwenkmechanismus schwenkt. Senkrecht zu dieser Ebene auftretenden Kräften könnte der erste Schwenkmechanismus möglicherweise nicht nachgeben. Da der zweite Schwenkmechanismus aber um eine Achse, welche nicht parallel liegt zur Schwenkachse des ersten Mechanismus, also auch in eine Ebene, welche nicht parallel zu der Bewegungsebene des ersten Mechanismus liegt, schwenkbar ist, kann der Arm dank des zweiten Schwenkmechanismus auch in dieser Richtung auftretenden Kräften nachgeben. Insgesamt ergibt sich somit daraus überdies indirekt besonders vorteilhaft eine erhöhte Robustheit des Kamera-Arms gegenüber vielfältigen äußeren Krafteinwirkungen, deren Schadwirkung infolgedessen minimiert werden.

Eine weitere besonders vorteilhafte Ausführungsform eines hier vorgeschlagenen Kamera-Arms weist mehr als eine Kamera auf. Dadurch ergibt sich einerseits, wenn ein einzelnes Blickfeld abgedeckt werden soll, dadurch der besondere Vorteil, dass zusätzliche Informationen, beispielsweise Tiefeninformationen, über die Bildinhalte gewonnen werden können. Andererseits können dabei besonders vorteilhaft Kameras mit unterschiedlichen Bilderfassungseigenschaften kombiniert werden; beispielsweise eine Kamera mit Tele-Eigenschaften und eine Kamera mit Weitwinkel-Eigenschaften.

Bei einer weiteren besonders vorteilhaften Ausführungsform eines hier vorgeschlagenen Kamera-Arms decken die zumindest zwei Kameras zumindest zwei verschiedene Blickfelder ab. Dadurch ergibt sich einerseits besonders vorteilhaft, dass unterschiedliche Blickwinkel von einem einzelnen Kamera-Arm aus mit Kameras abgedeckt werden können. Andererseits können dabei besonders vorteilhaft Kameras mit unterschiedlichen Bilderfassungseigenschaften kombiniert werden; beispielsweise eine Kamera mit Tele-Eigenschaften für einen schmalen Bildbereich, der in die Ferne, eventuell bis zum Horizont, reicht, und eine Kamera mit Weitwinkel-Eigenschaften für einen breiten Bildbereich.

Bei einer weiteren besonders vorteilhaften Ausführungsform eines hier vorgeschlagenen Kamera-Arms, welcher mehr als eine Kamera aufweist, und bei welchem die zumindest zwei Kameras zumindest zwei verschiedene Bildbereiche oder zumindest teilweise denselben Bildbereich abdecken, weist das zweite Strukturelement die zumindest zwei Kameras auf. Dadurch ergibt sich besonders vorteilhaft einerseits eine besonders weit vom Fahrzeug beabstandete Anordnung der Kameras. Andererseits ergibt sich dadurch zudem besonders vorteilhaft, dass durch den Austausch des zweiten Strukturelements, beispielsweise bei Wartungs- oder Instandsetzungsarbeiten, in einem Zug die zumindest zwei Kameras auf einmal ausgetauscht werden.

Bei einer weiteren besonders vorteilhaften Ausführungsform eines hier vorgeschlagenen Kamera-Arms, welcher mehr als eine Kamera aufweist, und bei welchem die zumindest zwei Kameras zumindest zwei verschiedene Blickfelder oder zumindest teilweise dasselbe Blickfeld abdecken, weist das erste Strukturelement zumindest eine Kamera auf und das zweite Strukturelement weist zumindest eine Kamera auf. Dadurch ergibt sich der besondere Vorteil, dass stärker voneinander abweichende Bildbereiche mit den zumindest zwei Kameras abzudecken ermöglicht wird.

Bei einer weiteren besonders vorteilhaften Ausführungsform eines hier vorgeschlagenen Kamera-Arms weist das zweite Strukturelement zusätzlich zumindest einen Spiegel auf. Dadurch wird besonders vorteilhaft ermöglicht, beispielsweise bei Auftreten eines Problems betreffend die elektrische Versorgung des Spiegelersatz-Systems oder anderen Fehlfunktionen, den Spiegel im Notfall zur Gewährleistung der Sicht zu verwenden.

Eine weitere besonders vorteilhafte Ausführungsform eines hier vorgeschlagenen Kamera-Arms weist zusätzlich Sensoren auf. Dadurch ergibt sich besonders vorteilhaft, dass diese Sensoren auch an sonst nicht zugänglichen Positionen am Fahrzeug angeordnet werden können, da ein Kamera-Arm über das Fahrzeug selbst herausragt. Weiterhin können die eingesetzten Sensoren beispielsweise besonders vorteilhaft eine verbesserte oder erweiterte Funktionalität des damit ausgerüsteten Kamera-Arms ermöglichen, beispielsweise indem Abstandssensoren, beispielsweise Ultraschallsensoren, in einem derartigen Arm angeordnet werden und diesen bei Detektion eines potentiell kollidierenden Hindernisses mittels eines Steuergeräts einklappen lässt. Solche Abstandswarner können beispielsweise in der Art von als Einparkhilfe bei PKW eingesetzten Ultraschall-Abstandswarner beschaffen sein.

Bevorzugt weist das zweite Strukturelement den oder die zusätzlichen Sensoren auf.

Eine weitere besonders vorteilhafte Ausführungsform eines hier vorgeschlagenen Kamera-Arms weist zusätzlich Kommunikationseinrichtungen auf. Dadurch kann besonders vorteilhaft ermöglicht werden, einen derartig ausgerüsteten Kamera-Arm für Kommunikation zu nutzen. Kommunikationseinrichtungen in diesem Zusammenhang können beispielsweise Lampen, Leuchten, Leuchtanzeigen und/oder Lautsprecher und/oder Mikrofone sein.

Bevorzugt weist das zweite Strukturelement die Kommunikationseinrichtungen auf.

Eine besonders vorteilhafte Ausführungsform eines hier vorgeschlagenen Kamera-Arms weist zusätzlich eine oder mehrere der folgenden Vorrichtungen auf: Eine Funkantenne zur Kommunikation, eine Positionsleuchte, ein Heizelement, eine Reinigungsvorrichtung zur Reinigung von Kameralinsen oder Kamera-Abdeckungen. Durch die Anordnung zusätzlicher Vorrichtungen am Kamera-Arm ergeben sich, je nach den Gegebenheiten der Vorrichtungen, vielfältige Vorteile. Beispielsweise kann eine Anordnung einer Funkantenne besonders vorteilhaft verbesserte Empfangs- und Sendeeigenschaften für die Antenne ermöglichen. Heizelemente können besonders vorteilhaft für Eisfreiheit oder gegen Wasseransammlung an Kameras oder Kamera-Armen sorgen. Reinigungsvorrichtungen zur Reinigung von Kameralinsen oder Kamera-Abdeckungen können besonders vorteilhaft den Betrieb der Kameras verbessern. Positionsleuchten können besonders vorteilhaft am Kamera-Arm angeordnet sein, um dadurch besonders vorteilhaft Aufmerksamkeit auf die durch den Kamera-Arm eingenommene Position zu lenken.

Bevorzugt weist das zweite Strukturelement die zusätzlichen Vorrichtungen wie Funkantenne, Positionsleuchte, Heizelemente etc. auf.

Die Funkantenne kann beispielsweise für digitale Kommunikation genutzt werden, beispielsweise für Fahrzeug-zu-Fahrzeug - Kommunikation oder Fahrzeug-zu-Infrastruktur - Kommunikation oder für Mobilfunk oder Wireless Local-Area-Network Verbindungen oder für DSRC oder für NFC oder für Mobilfunk (Beispielsweise für GSM, UMTS, LTE, 2G, 3G, 4G, 5G, LTE light, 2.5G etc.) oder zum Empfang von GNSS-Signalen und Signalen ähnlicher Systeme (z.B. Galileo, GPS, Glonass, Beidou, QZSS, GAGAN, etc.) oder für digitalen Radioempfang DAB. Durch die Integration einer Antenne in einen Kamera-Arm ergibt sich der besondere Vorteil eines verbesserten Empfangs.

Es kann sich bei einer Funkantenne zur Kommunikation auch um eine Antenne zur Kommunikation mit Infrastruktur oder mit anderen Fahrzeugen handeln, z.B. über WIMAX, WIFI, NFC oder Bluetooth.

Eine weitere besonders vorteilhafte Ausführungsform eines hier vorgeschlagenen Kamera-Arms Kamera-Arm ist in einer vorbestimmten Betriebsstellung verrastbar. Dadurch ergibt sich besonders vorteilhaft, dass der Kamera-Arm verlässlich beispielsweise in einer Position für den Fahrtbetrieb eingerastet sein kann.

Bei einer weiteren besonders vorteilhaften Ausführungsform eines hier vorgeschlagenen Kamera-Arms, welcher in einer vorbestimmten Betriebsstellung verrastbar ist, ist die Verrastung so gestaltet, dass sie den Kamera-Arm den durch Wind und Fahrtwind ausgeübten Kräften widerstehen lässt, aber dass bei größeren Kräften eine Bewegung des Kamera-Arms aus der Betriebsstellung heraus zugelassen wird. Dadurch ergibt sich besonders vorteilhaft, dass der Kamera-Arm im normalen Fahrtbetrieb in Betriebsstellung bleibt, aber bei Auftreten von Kollisionen oder anderen schädlichen äußeren Krafteinwirkung ausweicht, und so die Schadwirkung minimiert wird.

Die Erfindung wird nachfolgend anhand der Figuren der Zeichnung näher erläutert, wobei gleiche oder ähnliche Elemente mit denselben Bezugszeichen versehen sind. Es zeigt:
Figur 1 zeigt in einer Schnittzeichnung eine beispielhafte Ausführung eines erfindungsgemäßen Kamera-Arms 100 in einem ersten Bewegungszustand,
Figur 2 zeigt in einer Schnittzeichnung dieselbe beispielhafte Ausführung eines erfindungsgemäßen Kamera-Arms 100 wie in Figur 1, jedoch in einem (von dem ersten Bewegungszustand verschiedenen) zweiten Bewegungszustand.

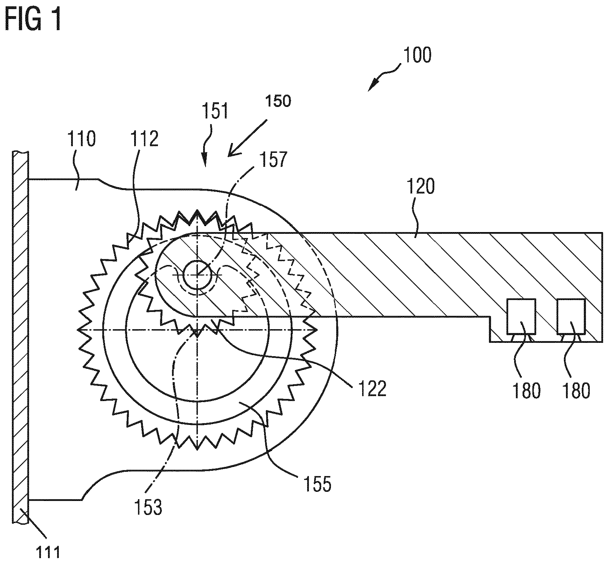

Figur 1 zeigt in einer Schnittzeichnung eine beispielhafte Ausführung eines erfindungsgemäßen Kamera-Arms 100 mit einem Schwenkmechanismus mit einem Planetengetriebe 151.

Figur 1 zeigt einen erfindungsgemäßen Kamera-Arm 100 in einem ersten Bewegungszustand, bei dem der Kamera-Arm sich in ausgeklappter Stellung, d.h. in Betriebsstellung beispielsweise für den Fahrbetrieb eines Kraftfahrzeugs, an dem der Kamera-Arm 100 angeordnet sein kann, befindet.

In dieser Ausführungsform weist das erste Strukturelement 110 eine Ausnehmung auf, die mit einer innenliegenden Verzahnung 112 versehen ist. Weiterhin weist das erste Strukturelement 110 eine erste Drehlagerung, d.h. eine Lagerung, die eine Rotation eines darin aufgenommenen Elements um eine erste Rotationsachse 153 ermöglicht, auf. Diese erste Rotationsachse 153 der ersten Drehlagerung ist koaxial mit der innenliegenden Verzahnung 112 angeordnet. In dieser ersten Drehlagerung ist eine Drehscheibe 155 des Planetengetriebes 151 aufgenommen, welche gegenüber dem ersten Strukturelement 110 um die erste Rotationsachse 153 drehbar ist und welche eine zweite Drehlagerung mit einer zweiten Rotationsachse 157 aufweist. Die zweite Rotationsachse 157 ist die Rotationsachse der zweiten Drehlagerung. Die zweite Rotationsachse 157 ist exzentrisch, d.h. gegenüber der ersten Rotationsachse 153 versetzt, an der Drehscheibe 155 angeordnet. Das zweite Strukturelement 120 des Kameraarms 100 weist ein Zahnrad 122 mit außenliegender Verzahnung auf. Das zweite Strukturelement 120 ist so an der Drehscheibe 155 angeordnet, dass die Drehachse des Zahnrads 122 mit der zweiten Rotationsachse 157 koaxial liegt. Zugleich sind das zweite Strukturelement 120 mit dem Zahnrad 122, die Drehscheibe 155 und das erste Strukturelement 110 mit der innenliegenden Verzahnung 112 so angeordnet, dass die Zähne des Zahnrads 122 in die innenliegende Verzahnung 112 greifen und umgekehrt.

Mit anderen Worten bilden die Ausnehmung im ersten Strukturelement 110 mit innenliegender Verzahnung 112, die darin koaxial gelagerte Drehscheibe 155 zusammen mit dem exzentrisch an der Drehscheibe 155 gelagerten zweiten Strukturelement 120 und mit dem Zahnrad 122 ein Planetengetriebe 151 aus, welches als Schwenkmechanismus ein Schwenken des zweiten Strukturelements 120 gegenüber dem ersten Strukturelement 110 ermöglicht.

Dabei kann beispielsweise eine Welle an der Drehscheibe 155 so angeordnet sein, dass sie koaxial mit der zweiten Rotationsachse 157, also exzentrisch in Bezug auf die Drehscheibe 155, liegt, und damit als Drehlagerung verwendet werden kann. Im gezeigten Ausführungsbeispiel kann das Zahnrad 122 durch diese Welle auf der zweiten Rotationsachse 157 aufgenommen sein.

Das Planetengetriebe 151 vermittelt eine zusammengesetzte Bewegung um die erste Rotationsachse Achsen 153 und die zweite Rotationsachse 157 über Getriebeteile aufweisend eine innenliegende Verzahnung 112, ein Zahnrad mit außenliegender Verzahnung 122 und eine Drehscheibe 155.

Beispielsweise ist das zweite Strukturelement 120 mit Zahnrad 122 einstückig gestaltet. In einem anderen Beispiel können das zweite Strukturelement 120 und das Zahnrad 122 separat hergestellt und nach der Herstellung zu einer festen Verbindung gebracht sein, beispielsweise durch Schweißen, Kleben, Verschrauben oder andern üblichen Verbindungstechniken.

In der gezeigten beispielhaften Ausführungsform weist das zweite Strukturelement 120 zwei Kameras 180 auf. Bevorzugt nehmen die beiden Kameras 180 unterschiedliche Blickwinkel und / oder Bildbereiche auf.

Das erste Strukturelement 110 des Kamera-Arms 100 weist eine Kontaktfläche 111 auf, welche bei in Kontakt mit einem Kraftfahrzeug steht, wenn der Kamera-Arm an einem Kraftfahrzeug angebracht ist.

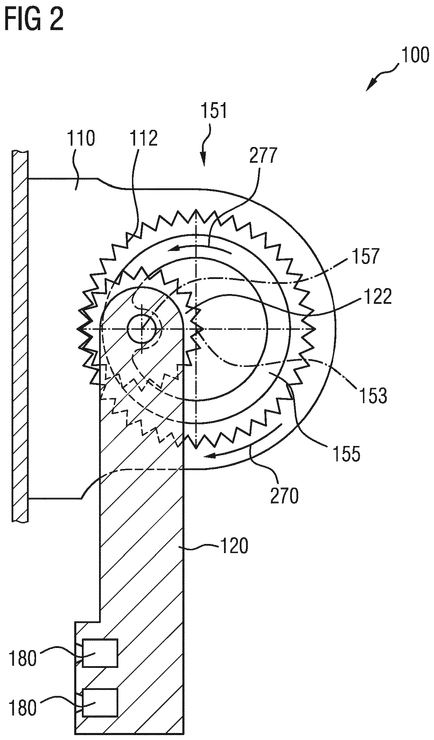

Figur 2 zeigt dieselbe Ausführungsform eines erfindungsgemäßen Kamera-Arms 100 in einem anderen, zweiten Bewegungszustand. Hierbei ist das zweite Strukturelement 120 in einer Stellung parallel zu der Kontaktfläche 111 des ersten Strukturelements 110, welche in Kontakt zu einem Kraftfahrzeug gebracht werden kann. Der in Figur 2 gezeigte Bewegungszustand kann beispielsweise erreicht werden, indem wie im vorigen Absatz geschildert ausgehend von dem in Figur 1 gezeigten Bewegungszustand des Kamera-Arms 100 eine äußere Kraft an dem zweiten Strukturelement 120 angreift.

Greift beispielsweise eine äußere Kraft an dem zweiten Strukturelement 120 an und bewirkt eine Bewegung des zweiten Strukturelements 120 gegenüber dem ersten Strukturelement in einer ersten Drehrichtung 270, welche in der in den Figuren 1 und 2 gezeigten Ansicht im Uhrzeigersinn verläuft, so geht mit dieser Bewegung des zweiten Strukturelements 120 relativ zum ersten Strukturelement 110 direkt eine Bewegung des Zahnrads 122 relativ zu der innenliegenden Verzahnung 112 einher, weil das Zahnrad 122 mit dem zweiten Strukturelement 120 fest verbunden ist und die die innenliegende Verzahnung 112 in einer Ausnehmung des ersten Strukturelements 110 angeordnet ist. Aus der relativen Drehbewegung des Zahnrads 122 gegenüber der innenliegenden Verzahnung 112 resultiert daher eine Abrollbewegung des Zahnrads 122 auf der innenliegenden Verzahnung 112, bei welcher das Zahnrad 122 wiederum die Drehscheibe 155 relativ zum ersten Strukturelement 110 verdreht, da das Zahnrad 122 an der zweiten Rotationsachse 157 exzentrisch an der Drehscheibe 155 angeordnet ist. Das bedeutet, dass sich die zweite Rotationsachse 157 dabei in einer zweiten Drehrichtung 277, welche in der in den Figuren 1 und 2 gezeigten Ansicht entgegen dem Uhrzeigersinn verläuft, relativ zu dem ersten Strukturelement 110 bewegt. Die erste Drehrichtung 270 ist stets der zweiten Drehrichtung 277 entgegengesetzt.

Der zweite Bewegungszustand entspricht einer eingeklappten Stellung eines erfindungsgemäßen Kamera-Arms, wie sie beispielsweise eingenommen werden kann, um bei einer Fahrt eines mit einem erfindungsgemäßen Kamera-Arm 100 ausgestatteten Fahrzeugs in beengten Verhältnissen eine Kollision mit Hindernissen zu vermeiden. Dabei handelt es sich beispielsweise um eine eingeklappte Betriebsstellung. Andererseits könnte ein solcher Bewegungszustand auch einer Stellung gerade nicht für den Betrieb darstellen, beispielsweise eines geparkten und nicht im Betrieb befindlichen Fahrzeugs. Beispielsweise könnte der in Figur 2 gezeigte Bewegungszustand auch in Folge einer Kollision des Kamera-Arms mit Hindernissen und einer daraus folgenden Ausweichbewegung des Kamera-Arms eingenommen werden.

## Patentansprüche

1. Kamera-Arm (100) eines kamerabasierten Spiegelersatz-Systems für ein Kraftfahrzeug aufweisend ein erstes Strukturelement (110) zur Verbindung des Kamera-Arms (100) mit einem Kraftfahrzeug und ein zweites Strukturelement (120), welches zumindest eine Kamera (180) aufweist, wobei das zweite Strukturelement (120) gegenüber dem ersten Strukturelement (110) schwenkbar ist, **dadurch gekennzeichnet, dass** das zweite Strukturelement (120) und das erste Strukturelement (110) über einen Schwenkmechanismus (150) miteinander verbunden sind, wobei der Schwenkmechanismus ein Planetengetriebe (151) aufweist, wobei das erste Strukturelement (110) eine mit einer innenliegenden Verzahnung (112) versehene Ausnehmung und eine koaxial mit der innenliegenden Verzahnung (112) angeordnete erste Rotationsachse (153) aufweist, wobei eine gegenüber dem ersten Strukturelement (110) um die erste Rotationsachse (153) drehbare Drehscheibe (155) eine exzentrisch angeordnete zweite Rotationsachse (157) aufweist und wobei das zweite Strukturelement (120) ein Zahnrad (122) mit einer außenliegenden Verzahnung aufweist, dessen Zähne in die innenliegende Verzahnung (112) greifen und dessen Drehachse mit der zweiten Rotationsachse (157) koaxial liegt.

2. Kamera-Arm (100) nach Anspruch 1, wobei das erste Strukturelement (110) und das zweite Strukturelement (120) direkt mittels des Schwenkmechanismus' miteinander verbunden sind.

3. Kamera-Arm (100) nach Anspruch 1, wobei das zweite Strukturelement (120) und das erste Strukturelement (110) über mehr als einen Schwenkmechanismus miteinander verbunden sind.

4. Kamera-Arm (100) nach Anspruch 3, wobei die Schwenkmechanismen so ausgeführt sind, dass der Kamera-Arm (100) um zumindest zwei Achsen schwenkbar ist, wobei die Achsen nicht parallel zueinander liegen.

5. Kamera-Arm (100) nach einem der vorangehenden Ansprüche, welcher mehr als eine Kamera (180) aufweist.

6. Kamera-Arm (100) nach Anspruch 5, wobei die zumindest zwei Kameras (180) zumindest zwei verschiedene Bildbereiche abdecken.

7. Kamera-Arm (100) nach Anspruch 5 oder 6, wobei das zweite Strukturelement (120) die zumindest zwei Kameras (180) aufweist.

8. Kamera-Arm (100) nach Anspruch 5 oder 6, wobei das erste Strukturelement (110) zumindest eine Kamera (180) aufweist und das zweite Strukturelement (120) zumindest eine Kamera (180) aufweist.

9. Kamera-Arm (100) nach einem der vorangehenden Ansprüche, wobei das zweite Strukturelement (120) zusätzlich zumindest einen Spiegel aufweist.

10. Kamera-Arm (100) nach einem der vorangehenden Ansprüche, welcher zusätzlich Sensoren aufweist.

11. Kamera-Arm (100) nach einem der vorangehenden Ansprüche, welcher zusätzlich Kommunikationseinrichtungen aufweist.

12. Kamera-Arm (100) nach einem der vorangehenden Ansprüche, welcher zusätzlich eine oder mehrere der folgenden Vorrichtungen aufweist: Eine Funkantenne zur Kommunikation, eine Positionsleuchte, ein Heizelement, eine Reinigungsvorrichtung zur Reinigung von Kameralinsen oder Kamera-Abdeckungen.

13. Kamera-Arm (100) nach einem der vorangehenden Ansprüche, welcher in einer vorbestimmten Betriebsstellung verrastbar ist.

14. Kamera-Arm (100) nach Anspruch 13, wobei die Verrastung so gestaltet ist, dass sie den Kamera-Arm (100) den durch Wind und Fahrtwind ausgeübten Kräften widerstehen lässt, dass aber bei größeren Kräften eine Bewegung des Kamera-Arms (100) aus der Betriebsstellung heraus zugelassen wird.

## Claims

1. Camera arm (100) of a camera-based mirror substitute system for a motor vehicle, comprising a first structural element (110) for connecting the camera arm (100) to a motor vehicle and a second structural element (120) which comprises at least one camera (180), wherein the second structural element (120) can be pivoted in relation to the first structural element (110), **characterized in that** the second structural element (120) and the first structural element (110) are connected to one another by way of a pivoting mechanism (150), wherein the pivoting mechanism comprises a planetary gearing (151), wherein the first structural element (110) comprises a cutout which is provided with an internal toothing (112) and a first axis of rotation (153) which is arranged coaxially with the internal toothing (112), wherein a rotary disc (155) which can be rotated in relation to the first structural element (110) about the first axis of rotation (153) comprises an eccentrically arranged second axis of rotation (157), and wherein the second structural element (120) comprises a gearwheel (122) with an external toothing, the teeth of which engage in the internal toothing (112) and the axis of rotation of which lies coaxially with the second axis of rotation (157) .

2. Camera arm (100) according to Claim 1, wherein the first structural element (110) and the second structural element (120) are connected to one another directly by means of the pivoting mechanism.

3. Camera arm (100) according to Claim 1, wherein the second structural element (120) and the first structural element (110) are connected to one another by way of more than one pivoting mechanism.

4. Camera arm (100) according to Claim 3, wherein the pivoting mechanisms are embodied such that the camera arm (100) can be pivoted about at least two axes, wherein the axes do not lie parallel to one another.

5. Camera arm (100) according to one of the preceding claims, which comprises more than one camera (180).

6. Camera arm (100) according to Claim 5, wherein the at least two cameras (180) cover at least two different image areas.

7. Camera arm (100) according to Claim 5 or 6, wherein the second structural element (120) comprises the at least two cameras (180).

8. Camera arm (100) according to Claim 5 or 6, wherein the first structural element (110) comprises at least one camera (180) and the second structural element (120) comprises at least one camera (180).

9. Camera arm (100) according to one of the preceding claims, wherein the second structural element (120) additionally comprises at least one mirror.

10. Camera arm (100) according to one of the preceding claims, which additionally comprises sensors.

11. Camera arm (100) according to one of the preceding claims, which additionally comprises communication apparatuses.

12. Camera arm (100) according to one of the preceding claims, which additionally comprises one or more of the following devices: a radio antenna for communication, a position light, a heating element, a cleaning device for cleaning camera lenses or camera covers.

13. Camera arm (100) according to one of the preceding claims, which can be latched in a predetermined operating position.

14. Camera arm (100) according to Claim 13, wherein the latching means is designed such that it makes it possible for the camera arm (100) to withstand the forces exerted by wind and relative wind, but such that, in the case of greater forces, a movement of the camera arm (100) out of the operating position is permitted.

## Revendications

1. Bras de caméra (100) d'un système de remplacement de rétroviseur à base de caméra destiné à un véhicule automobile, ledit bras de caméra comprenant un premier élément structurel (110) destiné à relier le bras de caméra (100) à un véhicule automobile et un deuxième élément structurel (120) qui comporte au moins une caméra (180), le deuxième élément structurel (120) pouvant pivoter par rapport au premier élément structurel (110), **caractérisé en ce que** le deuxième élément structurel (120) et le premier élément structurel (110) sont reliés l'un à l'autre par le biais d'un mécanisme de pivotement (150), le mécanisme de pivotement comportant une transmission planétaire (151), le premier élément structurel (110) comportant un évidement pourvu d'une denture intérieure (112) et un premier axe de rotation (153) disposé coaxialement à la denture intérieure (112), une plaque tournante (155) qui peut tourner sur le premier axe de rotation (153) par rapport au premier élément structurel (110) comportant un deuxième axe de rotation (157) disposé de manière excentrique et le deuxième élément structurel (120) comportant une roue dentée (122) à denture extérieure, dont les dents s'engrènent dans la denture intérieure (112) et dont l'axe de rotation est situé coaxialement au deuxième axe de rotation (157).

2. Bras de caméra (100) selon la revendication 1, le premier élément structurel (110) et le deuxième élément structurel (120) étant reliés l'un à l'autre directement au moyen du mécanisme de pivotement 1.

3. Bras de caméra (100) selon la revendication 1, le deuxième élément structurel (120) et le premier élément structurel (110) étant reliés l'un à l'autre par le biais de plus d'un mécanisme de pivotement.

4. Bras de caméra (100) selon la revendication 3, les mécanismes de pivotement étant conçus de telle sorte que le bras de caméra (100) puisse pivoter sur au moins deux axes, les axes n'étant pas parallèles entre eux.

5. Bras de caméra (100) selon l'une des revendications précédentes, lequel comporte plus d'une caméra (180).

6. Bras de caméra (100) selon la revendication 5, les au moins deux caméras (180) couvrant au moins deux zones d'image différentes.

7. Bras de caméra (100) selon la revendication 5 ou 6, le deuxième élément structurel (120) comportant les au moins deux caméras (180).

8. Bras de caméra (100) selon la revendication 5 ou 6, le premier élément structurel (110) comportant au moins une caméra (180) et le deuxième élément structurel (120) comportant au moins une caméra (180).

9. Bras de caméra (100) selon l'une des revendications précédentes, le deuxième élément structurel (120) comportant en plus au moins un miroir.

10. Bras de caméra (100) selon l'une des revendications précédentes, lequel comporte en outre des capteurs.

11. Bras de caméra (100) selon l'une des revendications précédentes, lequel comporte en outre des dispositifs de communication.

12. Bras de caméra (100) selon l'une des revendications précédentes, lequel comporte en outre un ou plusieurs des dispositifs suivants : une antenne radio destinée à la communication, un feu de position, un élément chauffant, un dispositif de nettoyage destiné à nettoyer les lentilles de caméra ou les caches de caméra.

13. Bras de caméra (100) selon l'une des revendications précédentes, pouvant être encliqueté dans une position de fonctionnement prédéterminée.

14. Bras de caméra (100) selon la revendication 13, l'encliquetage étant conçu de manière à permettre au bras de caméra (100) de résister aux forces exercées par le vent et le vent relatif, mais en ce qu'un mouvement du bras de caméra (100) hors de la position de fonctionnement est autorisé à des forces plus importantes.
